# EUROPÄISCHE PATENTSCHRIFT

(11) **EP 0 876 942 B1**
(45) Veröffentlichungstag und Bekanntmachung des Hinweises auf die Patenterteilung: **13.07.2005**
(21) Anmeldenummer: 98105963.7
(22) Anmeldetag: 01.04.1998
(51) Int. Cl.: B60R 21/20

(54) **Gassack-Modul für ein Fahrzeuginsassen-Rückhaltesystem**
Airbag module for a vehicle passenger restraining system
Module à coussin gonflable pour un système de tenenue de passager de véhicule

(30) Priorität: 08.04.1997 DE 29706246 U
(43) Veröffentlichungstag der Anmeldung: 11.11.1998
(73) Patentinhaber: TRW Automotive GmbH, 73553 Alfdorf (DE)
(72) Erfinder: Lutz, Joachim, 73579 Schechingen (DE); Debler, Jens, 73525 Herlikofen (DE); Dannenhauer, Reiner, 73642 Welzheim (DE)
(74) Vertreter: Kitzhofer, Thomas, Dipl.-Ing.

(56) Entgegenhaltungen:
- EP-A- 0 747 269
- EP-A- 0 756 971
- DE-A- 4 318 279
- DE-A- 19 622 320
- GB-A- 2 280 645
- US-A- 5 312 129
- US-A- 5 509 685
- US-A- 5 639 112

## Beschreibung

Die Erfindung betnfft ein Gassack-Modul für ein Fahrzeuginsassen-Rückhaltesystem nach dem Oberbegriff des Anspruchs 1.

Ein solches Gassack-Modul, das aus der DE-43 18 279 A, zeigt ein Gassackmodul, bei dem die Abdeckung mit Rastelementen versehen ist, die am Haltering eingeschnappt sind bekannt ist.

Nach der Aktivierung des Gasgenerators, der den Gassack aus seinem platzsparend zusammengelegten Zustand in seinen entfalteten Zustand überführt, tritt im Inneren des Gehäuses ein hoher Druck auf; außerdem ist das Gehäuse einem heißen Gasstrahl ausgesetzt. Aus diesen Gründen wurde bisher vor kurzem ausgegangen, daß es allein die Verwendung von Metall als Material für das Gehäuse und den Haltering ermöglicht, die bei der Aktivierung auftretenden Belastungen aufnehmen zu können. Seit kurzem ist aber aus dem oben genannten Dokument bekannt, daß auch die Verwendung von Kunststoff möglich ist. Ein Gehäuse aus Kunststoff läßt sich sehr viel kostengünstiger als ein Gehäuse aus Metall fertigen; daher ergeben sich Kostenvorteile bei der Herstellung. Ferner kann ein Gehäuse aus Kunststoff, das beispielsweise spritzgegossen werden kann, mit sehr viel komplexeren Gestaltungen hergestellt werden als ein herkömmliches Gehäuse aus Metall, so daß ein solches Gehäuse in sehr einfacher Weise speziell an die jeweiligen Einsatzbedingungen angepaßt werden kann.

Nach wie vor vergleichsweise aufwendig ist es, den Gassack am Gehäuse in seinem gefalteten Zustand zu halten. Aus dem oben genannten Dokument ist ein Gewebelappen bekannt, der über den gefalteten Gassack geschlagen und dann fixiert wird. Alternativ können konventionelle Abdeckungen verwendet werden, die aber vergleichsweise aufwendig am Gehäuse festgelegt werden müssen.

Die GB 2 280 645 A zeigt ein Gassackmodul, bei dem an einer Trägerplatte der Gassack mittels eines Haltenngs befestigt und die Abdeckung mit Rastelementen eingeschnappt sind. Aus der US 5 509 685 ist ein Gassackmodul bekannt, bei dem an einem Gehäuseunterteil, an dem die Abdeckung mit Rastelementen eingeschnappt ist, ein Haltering ausgebildet ist, mit dem der Gassack an einem Flansch des Gasgenerators befestigt ist.

Die Aufgabe der Erfindung besteht darin, eine Abdeckung für ein Gassack-Modul zu schaffen, die mit besonders wenig Aufwand hergestellt und am Gehäuse befestigt werden kann.

Zur Lösung dieser Aufgabe ist gemäß der Erfindung bei einem Gassack-Modul der eingangs genannten Art vorgesehen, daß die Abdeckung mit Positionierungselementen versehen ist, die formschlüssig in komplementäre Positionierungsteile am Gehäuse eingreifen, und daß das Gehäuse und der Haltering aus Kunststoff bestehen. Der Formschluß zwischen der Abdeckung und dem Gehäuse verbessert den Sitz der Abdeckung am Gehäuse erheblich, insbesondere bei Verformungen des Gehäuses unter dem nach Aktivierung des Gasgenerators im Inneren des Gehäuses wirkenden Druck. Ferner ergibt sich mit dieser Gestaltung eine besonders einfache Vorfixierung der Abdeckung am Haltering; auf diese Weise kann, wenn der Haltering vorher mit einem zusammengelegten Gassack versehen ist, eine vormontierte Baugruppe gebildet werden. Außerdem wurde festgestellt, daß auch bei der Abdeckung für den Gassack auf bei herkömmlichen Abdeckungen üblicherweise vorhandene Verstärkungen aus Metall verzichtet werden kann, ohne daß es zu Beeinträchtigungen der Festigkeit kommt.

Gemäß der bevorzugten Ausführungsform der Erfindung ist weiterhin vorgesehen, daß der Haltering wenigstens einen Schnapphaken aufweist, der in einer komplementären Öffnung im Gehäuse verrastet ist. Bei dieser Gestaltung kann der Haltering mit der an ihn angebrachten Abdeckung in besonders einfacher Weise am Gehäuse vorfixiert werden, bevor der Haltering und die Abdeckung mit dem Gasgenerator endgültig verschraubt wird.

Gemäß der bevorzugten Ausführungsform der Erfindung ist ferner vorgesehen, daß das Gassack-Modul langgestreckt ist und der Haltering mit Dehnungsausgestaltungen versehen ist, die ein Aufweiten in eine Richtung quer zur Längsachse des Moduls in der Erstreckungsebene des Halterings ermöglichen. Durch diese Gestaltung wird in ähnlicher Weise wie mittels des Formschlusses zwischen der Abdeckung und dem Gehäuse ermöglicht, daß der Haltering bei möglicherweise auftretenden Verformungen des Gehäuses zuverlässig an diesem befestigt bleibt und eventuellen Verformungen folgt, ohne daß dies die Funktion des Gassack- Moduls beeinträchtigen würde.

Gemäß der bevorzugten Ausführungsform der Erfindung ist weiterhin vorgesehen, daß die Abdeckung kastenförmig mit einer vom Gehäuse abgewandten, geschlossenen Oberseite und einer dem Gehäuse zugewandten, offenen Unterseite ist und sich zwischen diesen erstreckende Seitenwände aufweist, in denen Einkerbungen gebildet sind, die von der Unterseite ausgehen. Diese Einkerbungen erleichtern zum einen das Aufsetzen der Abdeckung auf den Haltering; zum anderen ermöglichen sie ebenso wie die Dehnungsausgestaltung des Halterings und der Formschluß zwischen der Abdeckung und dem Gehäuse, daß die Abdeckung eventuellen Verformungen des Gehäuses folgen kann, ohne daß die Funktion des Gassack-Moduls beeinträchtigt ist.

Weitere Details der Erfindung ergeben sich aus den Unteransprüchen.

Die Erfindung wird nachfolgend unter Bezugnahme auf eine bevorzugte Ausführungsform beschrieben, die in den beigefügten Zeichnungen dargestellt ist. In diesen zeigen:
- Figur 1 eine Explosionsansicht eines erfindungsgemäßen Gassack-Moduls;
- Figur 2 eine perspektivische Unteransicht der Abdeckung, die bei dem erfindungsgemäßen Gassack-Modul verwendet wird;
- Figur 3 einen schematischen Längsschnitt durch das erfindungsgemäße Gassack-Modul;
- Figur 4 eine schematische Querschnittsansicht durch eine Variante des erfindungsgemäßen Gassack-Moduls in einer durch die Schnapphaken führenden Ebene;
- Figur 5 eine schematische Querschnittsansicht durch eine Variante des erfindungsgemäßen Gassack-Moduls in einer durch die Rastbolzen verlaufenden Ebene;
- Figur 6 eine Explosions-Unteransicht der Variante eines erfindungsgemäßen Gassack-Moduls;
- Figur 7 eine schematische Explosions-Draufsicht auf das Gassack-Modul der Figuren 4 bis 6; und
- Figur 8 eine perspektivische Ansicht des Halterings des Gassack-Moduls der Figuren 4 bis 7.

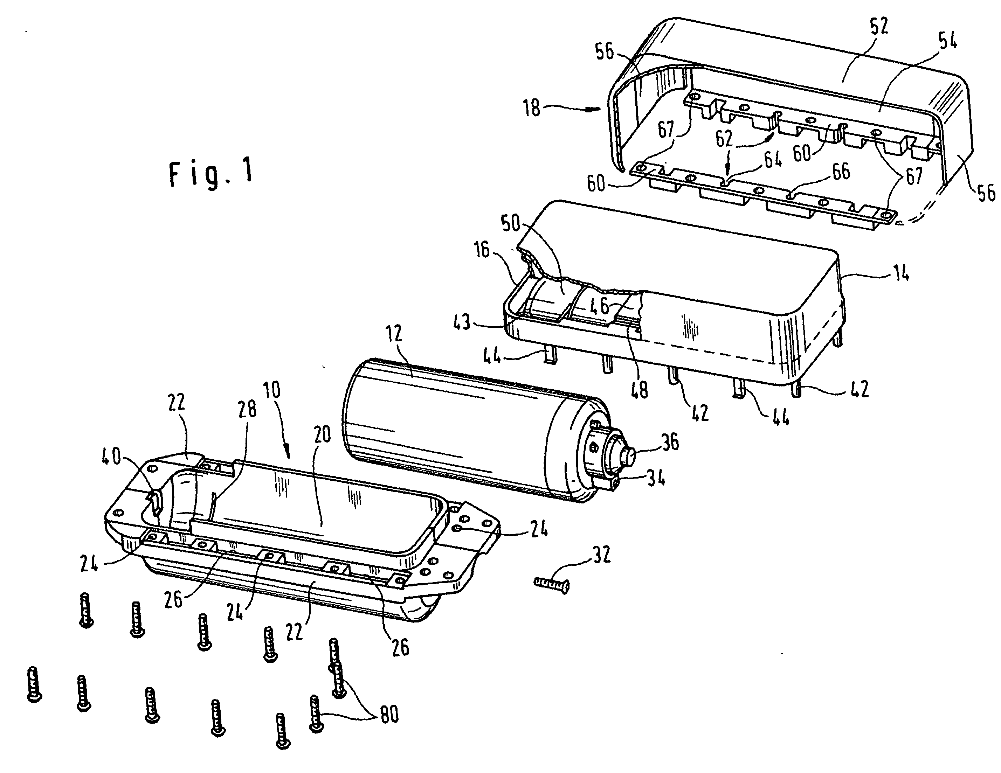

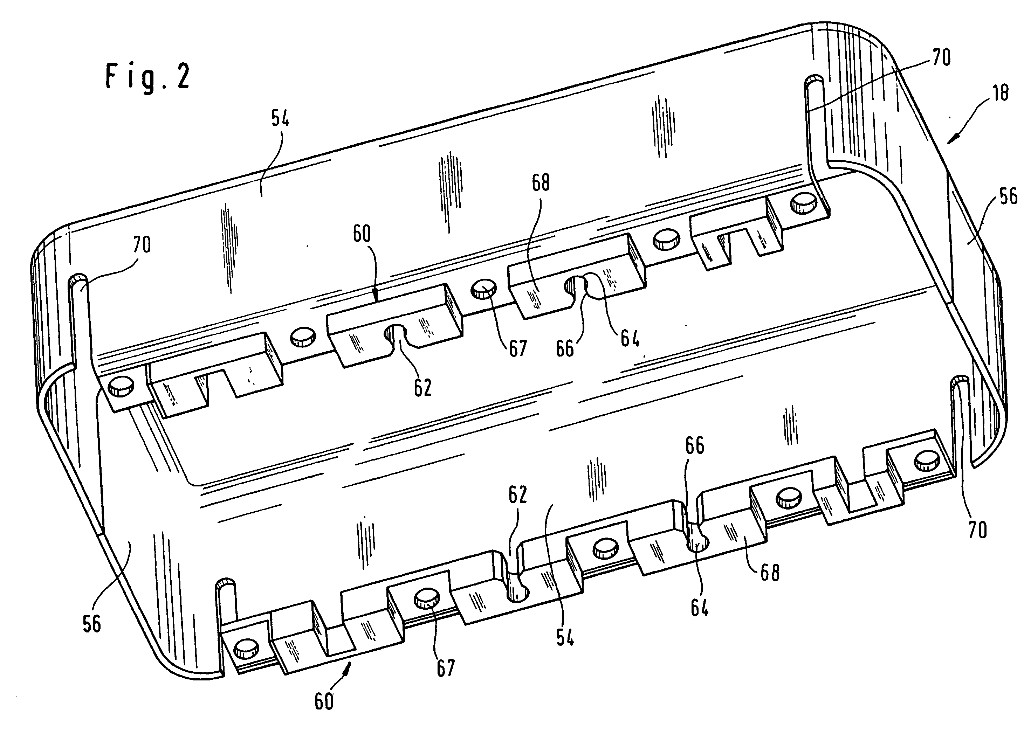

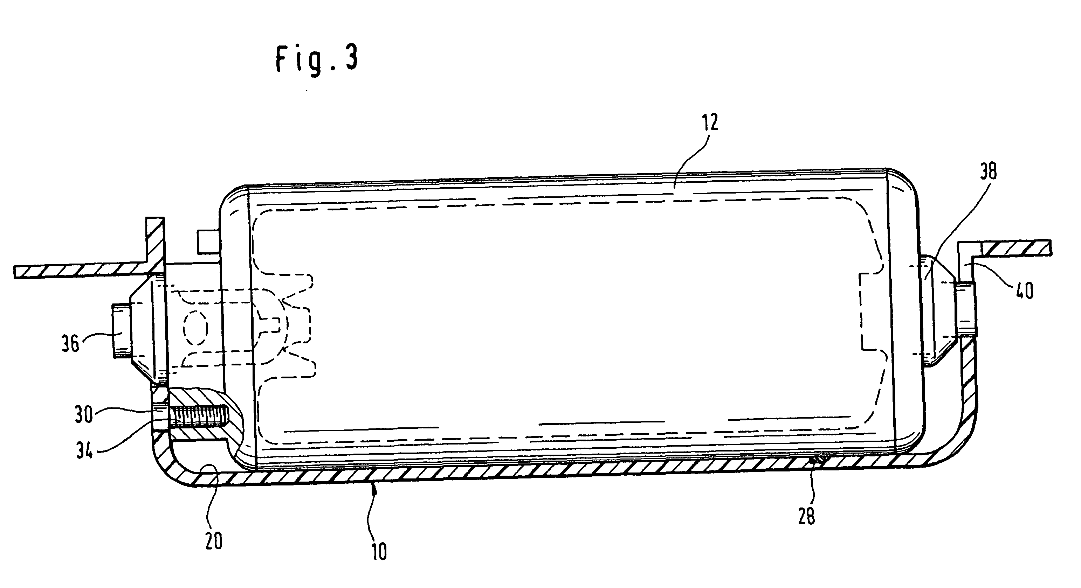

Das in den Figuren 1 bis 3 dargestellte Gassack-Modul besteht im wesentlichen aus einem Gehäuse 10, in dem ein Gasgenerator 12 angeordnet ist, sowie einem Gassack 14, der mit einem Haltering 16 versehen ist, und einer Abdeckung 18.

Das Gehäuse 10 hat eine langgestreckte Form und ist mit einer wannenartigen Aufnahme 20 für den Gasgenerator 12 versehen. Entlang den Längsseiten des Gehäuses 10 erstreckt sich jeweils eine Widerlagerleiste 22, die mit Öffnungen 24 sowie Positionierungsausnehmungen 26 versehen ist, deren Funktion später beschrieben wird. Die Aufnahme 20 des Gehäuses 10 ist außerdem mit einer Dichtleiste 28 versehen, die bei in die Aufnahme 20 eingelegtem Gasgenerator 12 an dessen Außenumfang in dichter Weise anliegt, so daß im Bereich des entsprechenden axialen Endes des Gasgenerators eine dichte Kammer gebildet ist. Das Gehäuse 10 weist außerdem eine Bohrung 30 für eine Fixierungsschraube 32 auf, die in ein Schraubenloch 34 des Gasgenerators 12 eingeschraubt werden kann.

Der Gasgenerator 12 hat eine allgemein zylindrische Form und wird in die Aufnahme 20 des Gehäuses 10 so eingelegt, daß das Schraubenloch 34 gegenüber der Bohrung 30 liegt. Anschließend kann die Fixierungsschraube 32 in das Schraubenloch 34 eingeschraubt werden, so daß der Gasgenerator 12 im Gehäuse 10 fixiert und eine vormontierte Baugruppe gebildet ist. Der in den Figuren dargestellte Gasgenerator 12 ist ein mehrstufiger Gasgenerator, der neben dem eigentlichen Zünder 36 mit einem zusätzlichen Zünder 38 versehen ist, der in einer Nut 40 im Gehäuse 10 fixiert ist. Die bei in das Gehäuse 10 eingesetztem Gasgenerator 12 an diesem in dichter Weise anliegende Dichtlippe 28 sorgt dafür, daß es zu keinem Leistungsverlust durch ein Strömen des vom Gasgenerator 12 erzeugten Gases durch die Aufnahme 20 kommt.

Der Gassack 14 ist in seinem Inneren mit dem Haltering 16 versehen. Dieser Haltering ist durch die Einblasöffnung des Gassacks 14 hindurch in diesen eingesetzt und im Bereich der Berandung der Einblasöffnung mittels Rastbolzen 42 fixiert, die in den Haltering eingepreßt sind und entsprechende Öffnungen in der Berandung der Einblasöffnung des Gassacks durchqueren. Der Haltering 16 weist Öffnungen 43 auf, die bei am Gehäuse 10 montiertem Haltering den Öffnungen 24 gegenüberliegen. Der Haltering 16 ist außerdem mit Schnapphaken 44 versehen, die in komplementäre Öffnungen im Gehäuse 10 einrasten können. Weiterhin ist der Haltering 16 mit einem Abstützsteg 46 versehen, der sich zwischen zwei einander gegenüberliegenden Längsseiten des Halterings 16 erstreckt und mit diesen über jeweils einen Deformationsabschnitt 48 verbunden ist. Schließlich ist der Haltering 16 mit einem schalenartigen Halteabschnitt 50 versehen, der bei auf das Gehäuse 10 aufgesetztem Haltering 16 am Außenumfang des Gasgenerators 12 angreift und diesen fixiert.

Die Abdeckung 18 ist kastenförmig ausgebildet und weist eine geschlossene Oberseite 52 sowie vier sich ausgehend von dieser erstreckende Seitenwände 54 bzw. 56 auf. Am freien unteren Rand der beiden Längs-Seitenwände 54 der Abdeckung 18 ist jeweils eine Rastleiste 60 vorgesehen. Jede Rastleiste 60 ist mit mehreren Einschnitten 62 versehen, die eine Erweiterung 64 aufweisen, deren Durchmesser dem Durchmesser der Rastbolzen 42 entspricht, und einen Klemmabschnitt 66, dessen Breite kleiner als der Durchmesser der Rastbolzen ist. Jede Rastleiste 60 weist im Bereich der Einschnitte 62 jeweils einen Positionierungsblock 68 auf, dessen Funktion später beschrieben wird. An jedem Ende jeder Rastleiste 60 ist in jeder Längs-Seitenwand 54 eine Einkerbung 70 vorgesehen, die sich über etwas mehr als die Hälfte der Höhe der Seitenwände erstreckt. Jede Rastleiste 60 ist außerdem mit Öffnungen 67 versehen, die bei montierter Abdeckung mit den Öffnungen 24 des Gehäuses 10 sowie den Öffnungen 43 des Halterings 16 ausgerichtet sind.

Das erfindungsgemäße Gassack-Modul wird in der folgenden Weise montiert: Zuerst wird der Gasgenerator 12 in die Aufnahme 20 des Gehäuses 10 eingelegt. Dann wird die Fixierungsschraube 32 durch die Bohrung 30 hindurch in das Schraubenloch 34 eingeschraubt, so daß der Gasgenerator 12 im Gehäuse 10 festgelegt ist.

Anschließend wird der Haltering 16 in den Gassack 14 eingelegt, und der Gassack 14 wird auf dem Haltering 16 liegend zusammengefaltet. Das zusammengefaltete Wandungspaket liegt auf dem Abstützsteg 46 auf, so daß es nicht durch den Haltering 16 hindurchsacken kann. Anschließend wird die Abdeckung 18 auf den gefalteten Gassack 14 und den Haltering 16 aufgesetzt. Aufgrund der Einkerbungen 70 können die Rastleisten 60 in einfacher Weise nach außen gezogen werden, so daß die Abdeckung so weit auf den Haltering 16 aufgesetzt werden kann, daß die Rastleisten 60 den Haltering 16 hintergreifen. Durch geringfügigen Druck auf die Rastleisten 60 zur Mitte des Halterings 16 hin werden die Einschnitte 62 auf die Rastbolzen 42 aufgedrückt, wobei der Klemmabschnitt 66 geringfügig erweitert wird, bis die Rastbolzen in der Erweiterung 64 zu liegen kommen. Die Abdeckung 18 ist dann aufgrund des Hintergreifens des Halterings 16 und des Einschnappens der Einschnitte 62 auf den Rastbolzen 42 sicher und zuverlässig an dem Haltering 16 befestigt. Auf diese Weise ist eine vormontierte Baugrupppe gebildet, die unabhängig von der aus dem Gasgenerator 12 und dem Gehäuse 10 gebildeten Baugruppe gehandhabt werden kann.

Anschließend wird die Baugruppe aus dem Haltering 16, dem Gassack 14 und der Abdeckung 18 auf die aus dem Gasgenerator 12 und dem Gehäuse 10 gebildete Baugruppe aufgesetzt, wobei die Schnapphaken 44 in entsprechenden Öffnungen des Gehäuses 10 einrasten. Anschließend werden beide Baugruppen miteinander verschraubt, indem Schrauben 80 in die Öffnungen 43 des Halterings 16 eingeschraubt werden, wobei diese Schrauben die Öffnungen 24 des Gehäuses 10 und die Öffnungen 67 der Abdeckung 18 durchqueren; die Öffnungen 24 und 67 sind dabei mit einem größeren Durchmesser ausgebildet als die Öffnungen 43, so daß die Schrauben 80 lediglich in den Öffnungen 43 greifen. Der Gassack ist dann an dem Gassack-Modul festgelegt, da er zwischen dem Haltering 16 und den Rastleisten 60 der Abdeckung 18 festgeklemmt ist. Die Abdeckung 18 ist an dem Gassack-Modul befestigt, da sie zwischen dem Haltering 16 und den Widerlagerleisten 22 des Gehäuses 10 festgeklemmt ist.

Gemäß der Erfindung bestehen das Gehäuse 10, der Haltering 16 und die Abdeckung 18 aus Kunststoff. Es wurde nämlich festgestellt, daß auch mit diesem Werkstoff alle Anforderungen an ein solches Gassack-Modul erfüllt werden können. Nach Aktivierung des Gasgenerators 12 wird das Gehäuse 10 möglicherweise geringförmig aufgeweitet; diese Verformungen beeinträchtigen die Funktionsweise des Gassack-Moduls aber nicht. Aufgrund der formschlüssig in die Widerlagerleiste des Gehäuses 10 eingreifenden Abdeckung und des Deformationsabschnitts 48 des Halterings 16 können die anderen Bauteile des Gassack-Moduls diesen Verformungen folgen, so daß die sichere Befestigung der Bauteile aneinander gewährleistet ist.

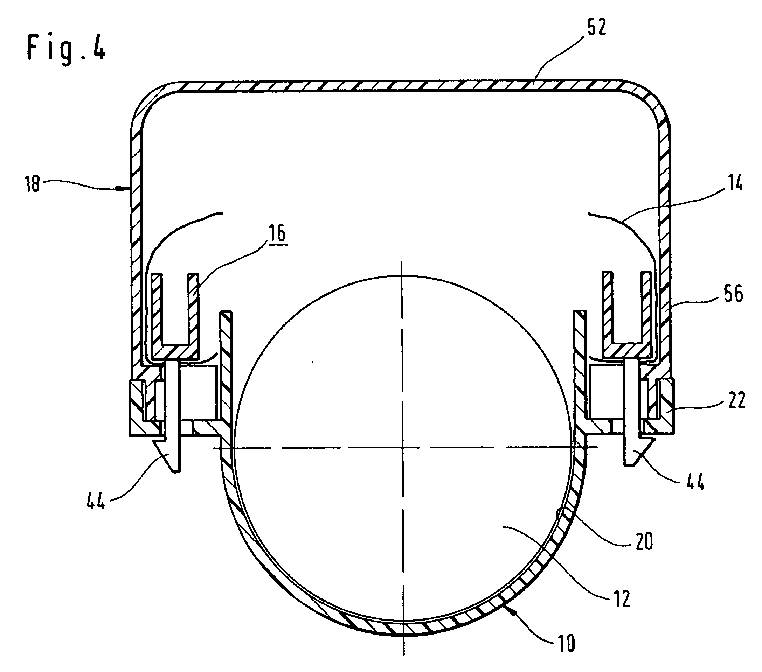

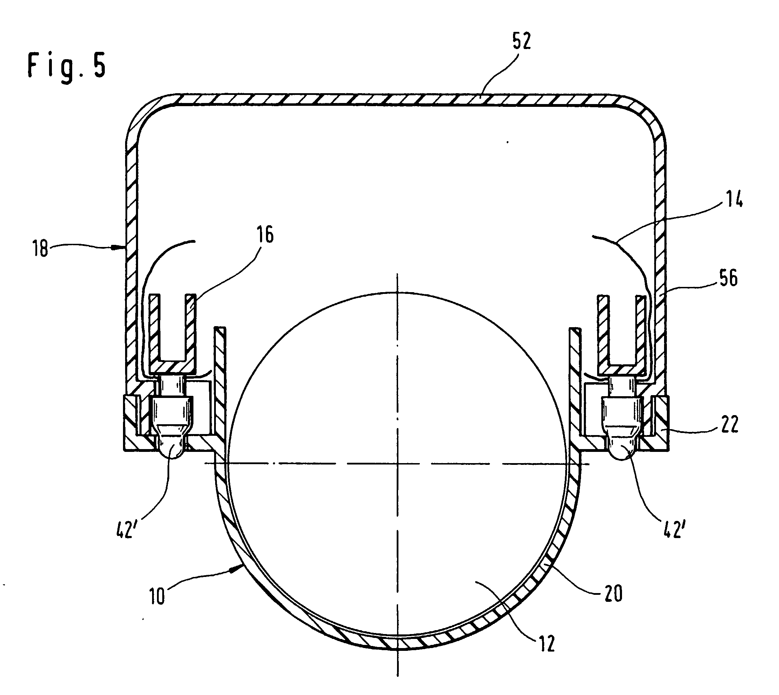

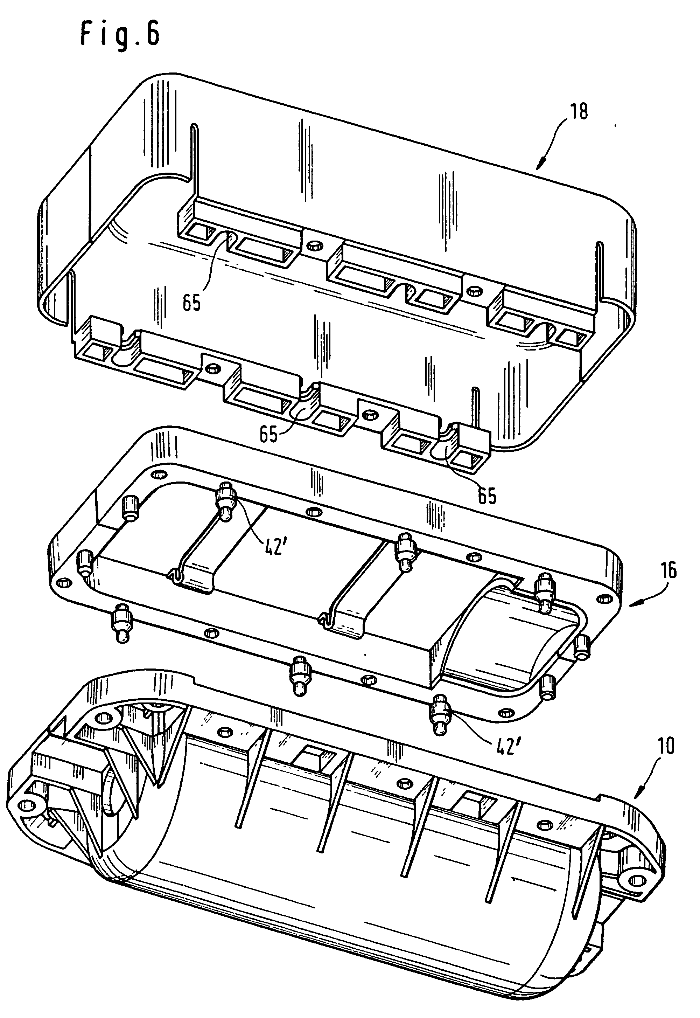

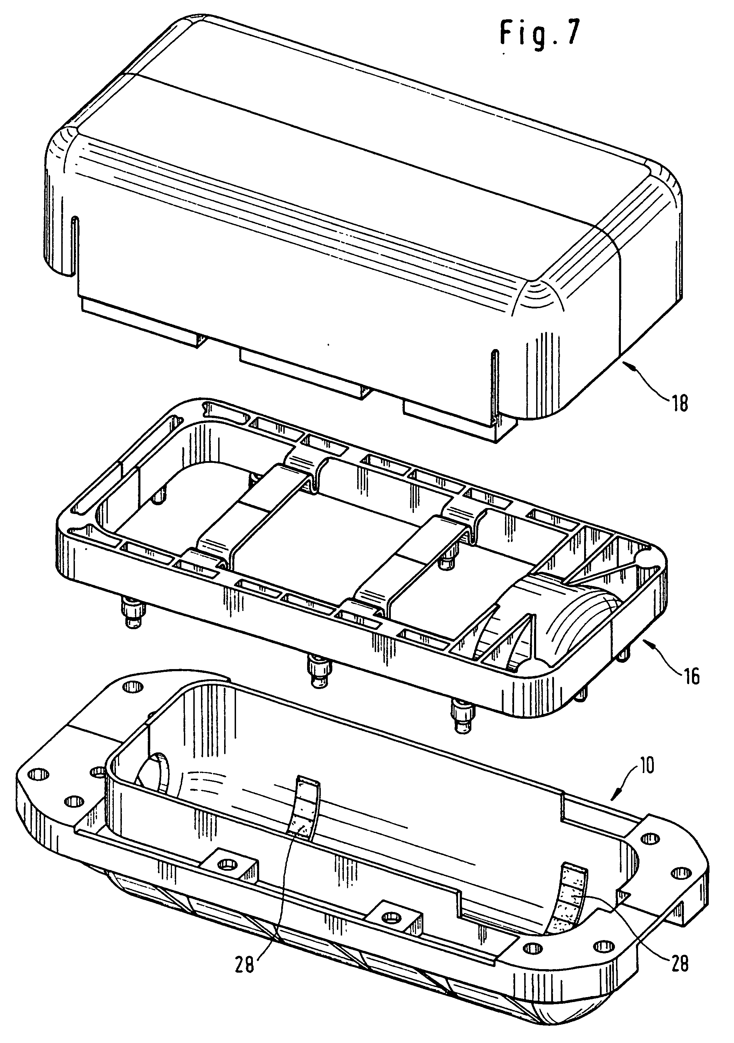

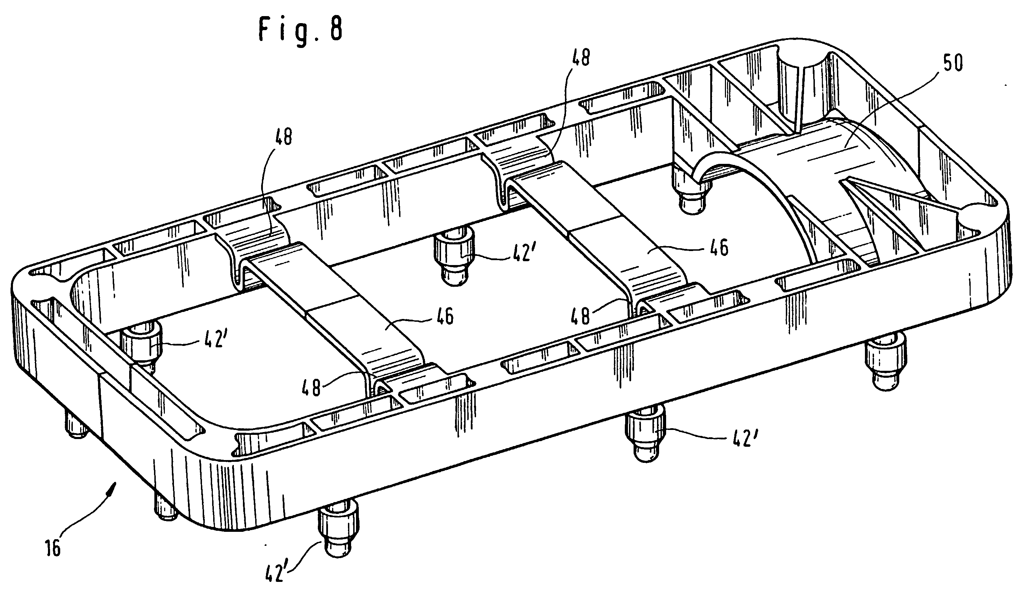

In den Figuren 4 bis 8 ist ein erfindungsgemäßes Gassack-Modul gemäß einer Variante dargestellt. Diese Variante unterscheidet sich lediglich geringfügig von der oben dargestellten Ausführungsform, so daß auf die dortige Beschreibung weitgehend verwiesen werden kann. Unterschiede bestehen im wesentlichen in der Form der verwendeten Rastbolzen 42 sowie in der Anzahl der vorgesehenen Dichtleisten 28.

Gemäß der Variante sind Rastbolzen 42' vorgesehen, die mit einem vergrößerten Kopf versehen sind. Dieser Kopf kommt in entsprechenden Ausnehmungen 65 der Rastleiste 60 der Abdeckung zu liegen.

In der Aufnahme 20 des Gehäuses 10 sind nunmehr zwei Dichtleisten 28 vorgesehen. Auf diese Weise werden die Strömungsverluste im Inneren des Gehäuses 10 weiter minimiert.

## Patentansprüche

1. Gassack-Modul für ein Fahrzeuginsassen-Rückhaltesystem, mit einem Gehäuse (10) für einen Gasgenerator (12), einem Haltering (16) für einen Gassack (14) und einer Abdeckung (18) für den Gassack (14), wobei die Abdeckung (18) für den Gassack (14) aus Kunststoff besteht und mit Rastelementen (62) versehen ist, die am Haltering (16) eingeschnappt sind, wobei die Rastelemente (62) an einer Rastleiste (60) ausgebildet sind, die den Haltering (16) hintergreift und wobei der Haltering (16) mit Rastbolzen (42) versehen ist und jedes Rastelement (62) der Abdeckung (18) aus einem Einschnitt (62) besteht, der eine Erweiterung (64) aufweist, deren Durchmesser dem Durchmesser der Rastbolzen (42) entspricht, und einen Klemmabschnitt (66), dessen Breite kleiner als der Durchmesser der Rastbolzen (42) ist, **dadurch gekennzeichnet, daß** die Abdeckung (18) mit Positionierungselementen (68) versehen ist, die formschlüssig in komplementäre Positionierungsteile (26) am Gehäuse (10) eingreifen, und daß das Gehäuse (10) und der Haltering (16) aus Kunststoffbestehen.

2. Gassack-Modul nach Anspruch 1, **dadurch gekennzeichnet, daß** die Positionierungselemente aus erhabenen Positionierungsblöcken (68) bestehen, die an der Rastleiste (60) angeordnet sind, und daß die Positionierungsteile durch Positionierungsausnehmungen (26) gebildet sind, die in einer Widerlagerleiste (22) am Gehäuse (10) ausgebildet sind.

3. Gassack-Modul nach Anspruch 2, **dadurch gekennzeichnet, daß** jeder Einschnitt (62) in einem Positionierungsblock (68) ausgebildet ist.

4. Gassack-Modul nach einem der Ansprüche 1 bis 3, **dadurch gekennzeichnet, daß** der Haltering (16) wenigstens einen Schnapphaken (44) aufweist, der in einer komplementären Öffnung im Gehäuse (10) verrastet ist.

5. Gassack-Modul nach einem Ansprüche 1 bis 4, **dadurch gekennzeichnet, daß** es langgestreckt ist und der Haltering (16) mit Dehnungsausgestaltungen (48) versehen ist, die ein Aufweiten in einer Richtung quer zur Längsachse des Moduls in der Erstreckungsebene des Halterings (16) ermöglichen.

6. Gassack-Modul nach Anspruch 5, **dadurch gekennzeichnet, daß** der Haltering (16) mit mindestens einem Abstützsteg (46) versehen ist, der sich zwischen zwei einander gegenüberliegenden Längsseiten des Halterings (16) erstreckt, und daß die Dehnungsausgestaltung des Halterings (16) durch mindestens einen Deformationsabschnitt (48) gebildet ist, der zwischen einem Ende des Abstützstegs (46) und der entsprechenden Längsseite angeordnet ist.

7. Gassack-Modul nach einem der Ansprüche 1 bis 6, **dadurch gekennzeichnet, daß** die Abdeckung (18) kastenförmig mit einer vom Gehäuse (10) abgewandten, geschlossenen Oberseite (52) und einer dem Gehäuse zugewandten, offenen Unterseite ist und sich zwischen diesen erstreckende Seitenwände (54, 56) aufweist, in denen Einkerbungen (70) gebildet ist, die von der Unterseite ausgehen.

8. Gassack-Modul nach Anspruch 6, **dadurch gekennzeichnet, daß** jede Einkerbung (70) sich über mehr als die Hälfte der Höhe der Abdeckung (18) erstreckt.

9. Gassack-Modul nach einem der Ansprüche 1 bis 8, **dadurch gekennzeichnet, daß** ein Gassack (14) vorgesehen ist, in dessen Inneren der Haltering (16) angeordnet ist.

10. Gassack-Modul nach Anspruch 9, **dadurch gekennzeichnet, daß** die Wandung des Gassacks (14) zwischen dem Haltering (16) und der Abdeckung (18) festgelegt ist.

11. Gassack-Modul nach Anspruch 1 und einem der Ansprüche 9 und 10, **dadurch gekennzeichnet, daß** der Haltering (16) im Bereich der Berandung der Einblasöffnung angeordnet ist und die Rastbolzen (42) in Öffnungen in der Berandung der Einblasöffnung eingreifen.

12. Gassack-Modul nach einem der Ansprüche 1 bis 11, **dadurch gekennzeichnet, daß** der Haltering (16) mit einem schalenartigen Halteabschnitt (50) für einen Gasgenerator (12) versehen ist.

13. Gassack-Modul nach einem der Ansprüche 1 bis 12, **dadurch gekennzeichnet, daß** das Gehäuse (10), die Abdeckung (18) und der Haltering (16) mit Öffnungen (24, 43, 67) für Schrauben (80) versehen sind, die den Haltering (16) mit dem Gehäuse (10) verspannen und **dadurch** die Abdeckung (18) und den Gassack (12) zwischen Gehäuse (10) und Haltering (16) einspannen.

14. Gassack-Modul nach einem der Ansprüche 1 bis 13, **dadurch gekennzeichnet, daß** der Haltering (16) und die Gassack-Abdeckung (18) eine vormontierte Baugruppe bilden.

15. Gassack-Modul nach einem der Ansprüche 1 bis 14, **dadurch gekennzeichnet, daß** im Inneren des Gehäuses ein Gasgenerator (12) angeordnet ist, der mit einem Schraubenloch (34) versehen ist, und daß das Gehäuse (10) mit einer Bohrung (30) für eine Fixierungsschraube (32) versehen ist, mit der der Gasgenerator (12) am Gehäuse (10) festgelegt ist, so daß das Gehäuse (10) und der Gasgenerator (12) eine vormontierte Baugruppe bilden.

16. Gassack-Modul nach Anspruch 15, **dadurch gekennzeichnet, daß** das Gehäuse (10) einen an die Form des Gasgenerators (12) angepaßten Boden (20) aufweist, der mit mindestens einer Dichtlippe (28) versehen ist, die an der Außenwandung des Gasgenerators (12) anliegt.

## Claims

1. A gas bag module for a vehicle occupant restraint system, comprising a housing (10) for an inflator (12), a retaining ring (16) for a gas bag (14), and a cover (18) for the gas bag (14), the cover (18) for the gas bag (14) being made of plastic and being provided with latching elements (62) snapped into place on the retaining ring (16), the latching elements (62) being configured on a latching strip (60) which engages behind the retaining ring (16), and the retaining ring (16) being provided with latching pins (42), and each latching element (62) of the cover (18) consisting of a recess (62) having a widened portion (64) the diameter of which corresponds to the diameter of the latching pins (42), and a clamping section (66) the width of which is smaller than the diameter of the latching pins (42), **characterized in that** the cover (18) is provided with positioning elements (68) engaging into complementary positioning parts (26) on the housing (10) with an interlocking fit, and that the housing (10) and the retaining ring (16) are made of plastic.

2. The gas bag module as set forth in claim 1, **characterized in that** the positioning elements consist of raised positioning blocks (68) arranged on the latching strip (60), and that the positioning parts are formed by positioning cavities (26) configured in an abutment strip (22) on the housing (10).

3. The gas bag module as set forth in claim 2, **characterized in that** each recess (62) is configured in a positioning block (68).

4. The gas bag module as set forth in any of claims 1 to 3, **characterized in that** the retaining ring (16) includes at least one snap-action hook (44) latched into place in a complementary opening in the housing (10).

5. The gas bag module as set forth in any of claims 1 to 4, **characterized in that** the gas bag module is elongated and the retaining ring (16) is provided with expansion structures (48) permitting a widening in a direction transversely to the longitudinal axis of the module in the extension plane of the retaining ring (16).

6. The gas bag module as set forth in claim 5, **characterized in that** the retaining ring (16) is provided with at least one supporting land (46) extending between two opposing longitudinal sides of the retaining ring (16), and that the expansion structure of the retaining ring (16) is formed by at least one deformation section (48) arranged between an end of the supporting land (46) and the corresponding longitudinal side.

7. The gas bag module as set forth in any of claims 1 to 6, **characterized in that** the cover (18) is box-shaped including a closed upper side (52) facing away from the housing (10) and an open underside facing the housing, the cover having side walls (54, 56) extending between the upper side and the underside, with notches (70) that emanate from the underside being formed in the side walls.

8. The gas bag module as set forth in claim 6, **characterized in that** each notch (70) extends over more than half of the height of the cover (18).

9. The gas bag module as set forth in any of claims 1 to 8, **characterized in that** a gas bag (14) is provided in the interior of which the retaining ring (16) is arranged.

10. The gas bag module as set forth in claim 9, **characterized in that** the wall of the gas bag (14) is fixed between the retaining ring (16) and the cover (18).

11. The gas bag module as set forth in claim 1 and either of claims 9 and 10, **characterized in that** the retaining ring (16) is arranged in the region of the rim of the inflation opening and the latching pins (42) engage into openings in the rim of the inflation opening.

12. The gas bag module as set forth in any of claims 1 to 11, **characterized in that** the retaining ring (16) is provided with a dish-like retaining section (50) for an inflator (12).

13. The gas bag module as set forth in any of claims 1 to 12, **characterized in that** the housing (10), the cover (18) and the retaining ring (16) are provided with openings (24, 43, 67) for bolts (80) that brace the retaining ring (16) relative to the housing (10), thereby clamping the cover (18) and the gas bag (12) between the housing (10) and the retaining ring (16).

14. The gas bag module as set forth in any of claims 1 to 13, **characterized in that** the retaining ring (16) and the gas bag cover (18) constitute a preassembled unit.

15. The gas bag module as set forth in any of claims 1 to 14, **characterized in that** arranged in the interior of the housing is an inflator (12) which is provided with a threaded hole (34), and that the housing (10) is provided with a bore hole (30) for a locating bolt (32) securing the inflator (12) to the housing (10) so that the housing (10) and the inflator (12) constitute a preassembled unit.

16. The gas bag module as set forth in claim 15, **characterized in that** the housing (10) has a bottom (20) adapted to the shape of the inflator (12) and provided with at least one sealing lip (28) engaging the outer wall of the inflator (12).

## Revendications

1. Module de coussin à gaz pour un système de retenue de passager de véhicule, comportant un boîtier (10) pour un générateur de gaz (12), une bague de retenue (16) pour un coussin à gaz (14) et un couvercle (18) pour le générateur de gaz (14), le couvercle (18) pour le coussin à gaz (14) étant en matière plastique et pourvu d'éléments d'enclenchement (72) qui sont encliquetés sur la bague de retenue (16), les éléments d'enclenchement (62) étant réalisés sur une baguette d'enclenchement (60) qui s'engage derrière la bague de retenue (16), et la bague de retenue (16) étant pourvue de goujons d'enclenchement (42) et chaque élément d'enclenchement (62) du couvercle (18) étant constitué par une encoche (62) qui présente un évasement (64) dont le diamètre correspond au diamètre des goujons d'enclenchement (42), et un tronçon de serrage (66) dont la largeur est inférieure au diamètre des goujons d'enclenchement (42), **caractérisé en ce que** le couvercle (18) est pourvu d'éléments de positionnement (68) qui s'engagent par coopération de formes dans des parties de positionnement (26) complémentaires sur le boîtier (10), et **en ce que** le boîtier (10) et la bague de retenue (16) sont en matière plastique.

2. Module de coussin à gaz selon la revendication 1, **caractérisé en ce que** les éléments de positionnement sont constitués par des blocs de positionnement (68) en relief qui sont agencés sur la baguette d'enclenchement (60), et **en ce que** les parties de positionnement sont formées par des évidements de positionnement (26) qui sont réalisés dans une baguette de contre-appui (22) sur le boîtier (10).

3. Module de coussin à gaz selon la revendication 2, **caractérisé en ce que** chaque encoche (62) est réalisée dans un bloc de positionnement (68).

4. Module de coussin à gaz selon l'une des revendications 1 à 3, **caractérisé en ce que** la bague de retenue (16) présente au moins un crochet d'encliquetage (44) qui est enclenché dans une ouverture complémentaire dans le boîtier (10).

5. Module de coussin à gaz selon l'une des revendications 1 à 4, **caractérisé en ce qu'**il est allongé et **en ce que** la bague de retenue (16) est pourvue de structures d'extension (48) qui permettent un évasement dans une direction transversale à l'axe longitudinal du module dans le plan d'extension de la bague de retenue (16).

6. Module de coussin à gaz selon la revendication 5, **caractérisé en ce que** la bague de retenue (16) est pourvue d'au moins une traverse de soutien (46) qui s'étend entre deux grands côtés opposés de la bague de retenue (16), et **en ce que** la structure d'extension de la bague de retenue (16) est formée par au moins un tronçon de déformation (48) qui est agencé entre une extrémité de la traverse de soutien (46) et le grand côté correspondant.

7. Module de coussin à gaz selon l'une des revendications 1 à 6, **caractérisé en ce que** le couvercle (18) est en forme de caisse avec une face supérieure fermée détournée du boîtier (10) et une face inférieur ouverte tournée vers le boîtier et présente des parois latérales (54, 56) s'étendant entre ces faces et dans lesquelles sont formées des entailles (70) qui partent de la face inférieure.

8. Module de coussin à gaz selon la revendication 6, **caractérisé en ce que** chaque entaille (70) s'étend sur plus de la moitié de la hauteur du couvercle (18).

9. Module de coussin à gaz selon l'une des revendications 1 à 8, **caractérisé en ce qu'**il est prévu un coussin à gaz (14) à l'intérieur duquel est agencé la bague de retenue (16).

10. Module de coussin à gaz selon la revendication 9, **caractérisé en ce que** la paroi du coussin à gaz (14) est immobilisée entre la bague de retenue (16) et le couvercle (18).

11. Module de coussin à gaz selon l'une des revendications 9 et 10, **caractérisé en ce que** la bague de retenue (16) est agencée dans la région de la bordure de l'orifice d'insufflation, et **en ce que** les goujons d'enclenchement (42) s'engagent dans des ouvertures dans la bordure de l'orifice d'insufflation.

12. Module de coussin à gaz selon l'une des revendications 1 à 11, **caractérisé en ce que** la bague de retenue (16) est pourvue d'un tronçon de retenue (50) en forme de coque pour un générateur de gaz (12).

13. Module de coussin à gaz selon l'une des revendications 1 à 12, **caractérisé en ce que** le boîtier (10), le couvercle (18) et la bague de retenue (16) sont pourvus d'ouvertures (24, 43, 67) pour des vis (80) qui serrent la bague de retenue (16) avec le boîtier (10) et tendent ainsi le couvercle (18) et le coussin à gaz (12) entre le boîtier (10) et la bague de retenue (16).

14. Module de coussin à gaz selon l'une des revendications 1 à 13, **caractérisé en ce que** la bague de retenue (16) et le couvercle de coussin à gaz (18) forment un ensemble préassemblé.

15. Module de coussin à gaz selon l'une des revendications 1 à 14, **caractérisé en ce qu'**à l'intérieur du boîtier est agencé un générateur de gaz (12) qui est pourvu d'un trou de vissage (34), et **en ce que** le boîtier (10) est pourvu d'un alésage (30) pour une vis de fixation (32) par laquelle le générateur de gaz (12) est immobilisé sur le boîtier (10) de telle sorte que le boîtier (10) et le générateur de gaz (12) forment un ensemble préassemblé.

16. Module de coussin à gaz selon la revendication 15, **caractérisé en ce que** le boîtier (10) présente un fond (20) adapté à la forme de générateur de gaz (12), qui est pourvu d'au moins une lèvre d'étanchéité (28) qui est en appui sur la paroi extérieure du générateur de gaz (12).
